# EUROPEAN PATENT SPECIFICATION

(11) **EP 2 604 994 B1**
(45) Date of publication and mention of the grant of the patent: **04.01.2017**
(21) Application number: 12000426.2
(22) Date of filing: 24.01.2012
(51) Int. Cl.: G01M 17/02, F16M 13/00, G01L 17/00

(54) **Sensor positioning device**
Sensorverstelleinrichtung
Système pour le positionnement de capteur

(30) Priority: 15.12.2011 CZ 20110826
(43) Date of publication of application: 19.06.2013
(73) Proprietor: Centrum dopravniho vyzkumu, v.v.i., 636 00 BRNO (CZ)
(72) Inventor: Krivanek, Vitezslav, 62801 Brno (CZ)
(74) Representative: Zemanová, Veronika

(56) References cited:
- CN-A- 101 762 319
- US-A- 4 532 807
- US-A- 5 515 726
- US-A1- 2006 266 120

## Description

### Field of art

The technical invention relates to a positioning device for adjusting acoustic pressure sensors on a trailer for measuring acoustic pressure emitted by tires of wheels of the trailer while it is driving on a measured surface of a road.

### State of the art

Trailers of the above mentioned type are used for measuring acoustic pressure level generated at the interface of a tested road surface / a reference tire at one or more reference speeds, the measurement is done by using the "Close Proximity Method", which is a measurement at a small distance from the source of the acoustic pressure. This method is described in detail in the draft of standard ISO/CD11819-2. For each reference tire and for each test ride with the tire the average noise levels and the vehicle speed at each 20 m long test segments are recorded. The noise level is then normalized with respect to the reference speed by conversion and the resulting average noise level for each measuring microphone at the respective reference speed is called a noise level or an acoustic pressure level at the interface tire / road. Results for each type of the reference tires may be converted then into a one-digit CPXI index that can be used to compare acoustic properties of various road surfaces.

The acoustic pressure level has to be sensed by at least two microphones at each wheel. A special measuring self-propelled vehicle or a measuring trailer pulled by a regular vehicle is used for the measurement. There are reference test tires mounted on the wheels and the test vehicle / trailer may have single wheels or more wheels arranged next to each other. The use of the self-propelled measuring vehicle is limited by a requirement that the microphones should not be arranged near to the driven or controlled wheel while the distance between the microphones and the wheels which are not measured should be at least 1.5 m and in addition the lower part of the vehicle has to be covered with a sound absorbing material to prevent any sound reflections which could influence the results of the measurement.

For a precise measurement of tire noise several acoustic pressure sensors are used, usually directional microphones, and it is very important that these directional microphones are pointed towards the place where the noise origins, i.e. towards the point of contact between the measured tire and the tested road surface and that the microphones are in a pre-determined distance from the source of the acoustic pressure. This work is complex and lengthy, because it is necessary to adjust a number of independent variables simultaneously, namely the height of the directional microphones above the tested road surface, the translation of the directional microphones with respect to the wheel axis and spatial positioning of the directional microphones so that they are be pointed towards the point of contact between the tire and the surface of the road. As an example, the document US20060266120 discloses a positioning device for positioning of acoustic pressure sensors on a trailer for a measurement of an acoustic pressure emitted by tires of wheels of the trailer while it is driven on a measured surface of a road.

The goal of the technical invention is to design an equipment for a trailer for positioning acoustic pressure sensors before measuring the acoustic pressure emitted by the tires so that the acoustic pressure sensors could be easily pointed to the point of contact between the tire and the road surface and fixed in that position.

### Summary of the invention

Said problem is solved by a positioning device for positioning of acoustic pressure sensors on a trailer for a measurement of an acoustic pressure emitted by tires of wheels of the trailer while it is driven on a measured surface of a road according to the invention, wherein the positioning device comprises a flat template arranged on legs, the legs having adjustable height to enable an arrangement of the flat template in parallel with the surface of the road, while the flat template is firmly connected to a vertical bar of a holder, which is slidably arranged on the bar to enable a central attachment of the positioning device to the hub of the wheel and the attachment means for slidably attaching the holder to the vertical bar is lockable.

According to a preferred embodiment the template is provided at its outer edge with marks for placing the acoustic pressure sensors and with lines extending from said marks on the template and having a common point of intersection for directing the acoustic pressure sensors towards the point of contact between the closest part of the tire and the measured surface of the road. Preferably, the marks for placing the acoustic pressures sensors are indentations for both receiving the acoustic pressure sensors and for their fixation in the set position.

According to a further embodiment of the invention, the template is arranged on four legs, wherein the distance between the template and the surface of the road is adjustable in the range from 6 to 25 centimeters by means of the legs.

According to a further embodiment of the invention the marks for placing the acoustic pressure sensors are arranged symmetrically with respect to the axis of the wheel and evenly spaced from each other, preferably 15 to 25 centimeters.

According to a further embodiment of the invention the template is provided with a ruler at its outer edge.

According to a most preferred embodiment the acoustic pressure sensors are directional microphones.

### Brief description of the drawings

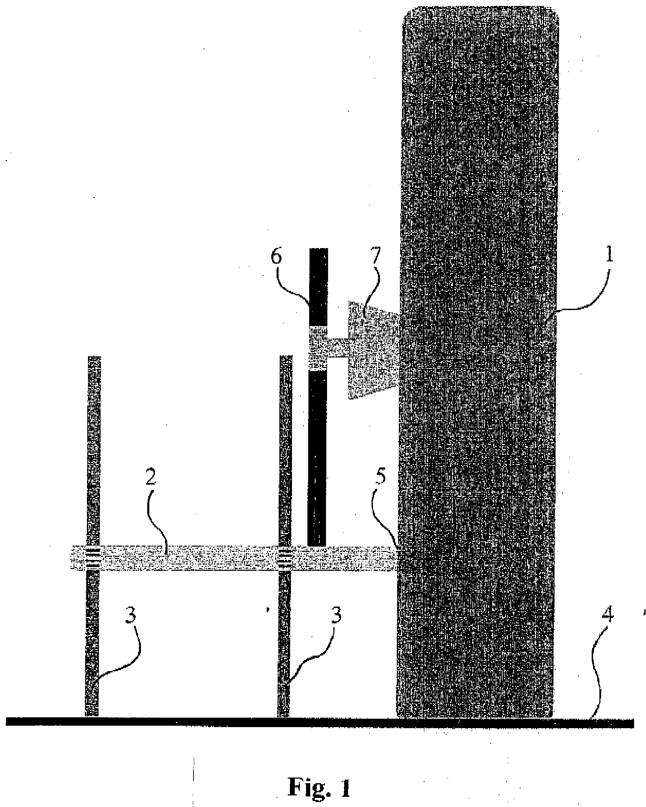

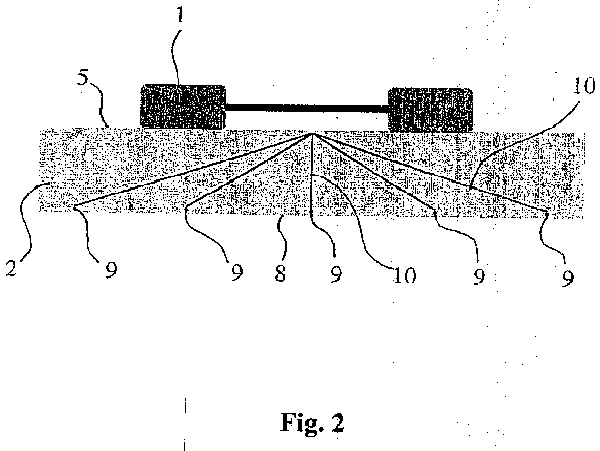

The technical solution will be further described in detail with reference to the attached Figures, wherein Fig. 1 shows a side view of an exemplifying embodiment of the positioning device according to the invention and Fig. 2 shows a plan view of the exemplifying embodiment of the positioning device according to the invention.

### Examples of the preferred embodiments

Fig. 1 shows a side view of an exemplifying embodiment of the positioning device for adjusting acoustic pressure sensors, as viewed in the travel direction of the trailer. The acoustic pressure sensors (not shown) are attached to a bar of the trailer (not shown). Said bar is arranged in parallel to the direction of travel of the trailer during measuring of the acoustic pressure level emitted by the tires **1** of its wheels while driving it on a measured surface of a road. The positioning device contains a flat template **2** placed on legs **3** having adjustable height which enable an arrangement of the flat template **2** in parallel with a road surface **4.** An inner edge **5** of the flat template **2** abuts the tire **1** of the wheel and the fiat template **2** is firmly attached to a vertical bar **6** of a holder **7**, wherein a holder **7** for a central attachment of the positioning device to the hub of the wheel is slidably attached to the bar **6**. The slidable connection of the holder **7** and the vertical bar **6** may be locked by a locking device (not-shown). The distance between the flat template **2** and the road surface **4** may be adjusted in a range of 6 to 25 centimeters by means of the legs **3**.

Fig. 2 shows a plan view of the exemplifying embodiment of the positioning device for positioning of acoustic pressure sensors. The inner edge **5** of the flat template **2** abuts the tire **1** of the wheel and the flat template **2** is provided at its outer edge **8** with marks **9** for placing the acoustic pressure sensors, and lines **10** extend from these marks **9** on the flat template **2** towards a common point of intersection for directing the acoustic pressure sensors towards the point of contact between the closest part of the tire **1** and the measured surface **4** of the road. The marks **9** for placing the acoustic pressure sensors are usually indentations for both an receiving the acoustic pressure sensors and for fixing those in a set position. The marks **9** for placing the acoustic pressure sensors are arranged usually symmetrically with respect to the axis of the wheel and the tire **1**, they are evenly spaced from each other, the spacing being in the range from 15 to 25 cm, preferably 20 centimeters. The flat template **2** is provided with a ruler (not shown) at its outer edge **8**, using which it is possible to read the distance between a respective mark **9** and the middle of the flat template **2**, or to move an acoustic pressure sensor in a defined way along the outer edge **8** of the flat template **2.** Directional microphones are most commonly used as the acoustic pressure sensors.

In operation the positioning device for adjustment of the acoustic pressure sensor works like this: the height at which the acoustic pressure sensors should be arranged above the surface **4** of the road is to be determined. The legs **3** are raised according to the desired height, for example using thread means. According to the exemplifying embodiment the positioning device makes changing of the height of the flat template above the surface **4** of the road from 6 to 25 centimeters possible such that the positioning device may be adjusted to any wheel size and any tire size. The flat template **2** is arranged with its inner edge **5** adjacent to the tire **1** of the wheel. Then, the vertical bar **6** is moved in the holder **7** to allow central attachment of the positioning device to the hub of the wheel. When the holder **7** is centrally attached to the mounting hub of the wheel and the legs **3** are set such that the flat template **2** stands with its legs **3** on the surface **4** of the road, the holder **7** is locked on the vertical bar **6** and it is possible to start the positioning. The acoustic pressure sensors are arranged on hinged holders (not-shown). The joints of these holders will be unlocked and the tops of the acoustic pressure sensors will be seated into the individual marks **9**, while the sensors will be pointed along the lines **10** on the flat template **2** towards the intersection of the lines **10**, so that the vertical projection of the axis of the acoustic pressure sensor into the plane of the flat template **2** matches the respective line **10**. Then, the acoustic pressure sensors will have to be manually set in one plane only, i.e. in the plane defined by the axis of the acoustic pressure sensor and by the respective line **10**. By this manual setting, the acoustic pressure sensor gets pointed to the point of contact between the closest part of the tire **1** and the measured surface **4** of the road. After setting the individual acoustic pressure sensors, the legs **3** will be released from the flat template **2** and the holder **7**, which has been attached to the hub of the wheel, so that the flat template **2** can be safely withdrawn from the area surrounding the tire **1** without accidentally hitting any of the acoustic pressure sensors.

Use of the positioning device for positioning of acoustic pressure sensors reduces the time needed for positioning the acoustic pressure sensors significantly and it makes the result of such positioning much more accurate.

### Industrial applicability

The invention may be used when preparing measurement of level of acoustic pressure emitted by the tires of the wheels during a drive on the surface of a measured road.

## Claims

1. Positioning device for positioning of acoustic pressure sensors on a trailer for a measurement of an acoustic pressure emitted by tires (1) of wheels (2) of the trailer while it is driven on a measured surface (3) of a road **characterized in that** the positioning device comprises a flat template (5) arranged on legs (6), the legs (6) having adjustable height to enable an arrangement of the flat template (5) in parallel with the surface (3) of the road, while the flat template (5) is firmly connected to a vertical bar (7) of a holder (4), which is slidably arranged on the bar (7) to enable a central attachment of the positioning device to the hub of the wheel (2) and the attachment means for slidably attaching the holder (4) to the vertical bar (7) is lockable.

2. The positioning device according to claim 1, **characterized in that** the template (5) is provided at its outer edge with marks for placing the acoustic pressure sensors and with lines extending from said marks on the template (5) and having a common point of intersection for directing the acoustic pressure sensors towards the point of contact between the closest part of the tire and the measured surface (3) of the road.

3. The positioning device according to claim 2, **characterised in that** the marks for placing the acoustic pressures sensors are indentations for both receiving the acoustic pressure sensors and for their fixation in the set position.

4. The positioning device according to claim 1, **characterized in that** the distance between the template (5) and the surface (3) of the road is adjustable by means of the legs (6) in the range from 6 to 25 centimeters.

5. The positioning device according to claim 1, **characterized in that** the marks for placing the acoustic pressure sensors are arranged symmetrically with respect to the axis of the wheel (2) and evenly spaced from each other.

6. The positioning device according to claim 5, **characterized in that** the spacing between the marks for placing the acoustic pressure sensors is in a range from 15 to 25 centimeters.

7. The positioning device according to claim 1 or 2, **characterized in that** the template (6) is provided with a ruler at its outer edge.

8. The positioning device according to claim 1, **characterized in that** the acoustic pressure sensors are directional microphones.

## Patentansprüche

1. Positionierungsvorrichtung zur Positionierung von akustischen Drucksensoren zur Ermittlung des von Reifen (1) von Rädern (2) eines Anhängers während der Fahrt auf einer zu vermessenden Oberfläche (3) einer Fahrstraße emittierten Schalldruckpegels an dem Anhänger, **dadurch gekennzeichnet, dass** die Positionierungsvorrichtung eine auf Füssen (6) angeordnete flächige Schablone (5) umfasst, wobei die Füße (6) höhenverstellbar sind, um das Erreichen einer parallelen Anordnung der flächigen Schablone (5) in Bezug auf die Oberfläche (3) der Fahrstraße zu ermöglichen, wobei die flächige Schablone (5) mit einem vertikalen Stab (7) einer Halterung (4) fest verbunden ist, die an dem Stab (7) verschiebbar angeordnet ist, um eine zentrale Anbringung der Positionierungsvorrichtung in Bezug auf die Nabe des Rades (2) zu ermöglichen, wobei die Verbindungsmittel zur verschiebbaren Anbringung der Halterung (4) an dem vertikalen Stab (7) verriegelbar sind.

2. Positionierungsvorrichtung nach Anspruch 1, **dadurch gekennzeichnet, dass** die Schablone (5) im Bereich ihrer äußeren Kante mit Marken zur Unterbringung von akustischen Drucksensoren versehen ist, wobei von den besagten Marken Striche geführt werden, welche die Schablone (5) überqueren und einen gemeinsamen Schnittpunkt aufweisen, der zum Richten der akustischen Drucksensoren gegen dem Berührungspunkt zwischen dem nächstliegenden Teil des Reifens und der zu vermessenden Oberfläche (3) der Fahrstraße vorgesehen ist.

3. Positionierungsvorrichtung nach Anspruch 2, **dadurch gekennzeichnet, dass** die Marken zur Unterbringung von akustischen Drucksensoren als Kerben ausgeführt sind, die einerseits zur Aufnahme der akustischen Drucksensoren und andererseits zur Fixierung derselben in einer eingestellten Position vorgesehen sind.

4. Positionierungsvorrichtung nach Anspruch 1, **dadurch gekennzeichnet, dass** der Abstand zwischen der Schablone (5) und der zu vermessenden Oberfläche (3) der Fahrstraße mittels der Füße (6) im Bereich von 6 bis 25 Zentimeter einstellbar ist.

5. Positionierungsvorrichtung nach Anspruch 1, **dadurch gekennzeichnet, dass** die Marken zur Unterbringung von akustischen Drucksensoren symmetrisch gegenüber der Achse des Rades (2) angeordnet und gegenseitig gleichmäßig beabstandet sind.

6. Positionierungsvorrichtung nach Anspruch 5, **dadurch gekennzeichnet, dass** die gegenseitigen Abstände zwischen den Marken zur Unterbringung von akustischen Drucksensoren im Bereich von 15 bis 25 Zentimeter einstellbar sind.

7. Positionierungsvorrichtung nach Anspruch 1 oder 2, **dadurch gekennzeichnet, dass** die äußere Kante der Schablone (5) mit einem Maßstab versehen ist.

8. Positionierungsvorrichtung nach Anspruch 1, **dadurch gekennzeichnet, dass** die akustischen Drucksensoren Richtungsmikrofonen sind.

## Revendications

1. Dispositif de positionnement pour le positionnement des capteurs de pression acoustique sur une remorque pour une mesure de la pression acoustique émise par les pneus (1) des roues (2) de la remorque alors qu'elle est entraînée et roulée sur une surface (3) mesurée d'une route, **caractérisé en ce que** le dispositif de positionnement comprend un gabarit (5) plane disposé sur les colonnes (6), les colonnes (6) ayant une hauteur réglable pour permettre un arrangement du gabarit (5) plane en parallèle avec la surface (3) de la route, tandis que le gabarit plane (5) est fermement connecté à une barre (7) verticale d'un support (4), qui est agencé de manière coulissante sur la barre (7) pour permettre une fixation centrale du dispositif de positionnement sur le moyeu de la roue (2), pendant que le moyen de fixation pour fixer de façon coulissante le support (4) à la la barre verticale (7) est verrouillable.

2. Dispositif de positionnement selon la revendication 1, **caractérisé en ce que** le gabarit (5) est pourvu sur son bord extérieur avec des marques pour placer les capteurs de pression acoustique et aussi avec des lignes partant de lesdites marques sur le gabarit (5) et ayant un point commun d'intersection pour diriger les capteurs de pression acoustique en direction du point de contact entre la partie la plus proche du pneu et la surface (3) mesurée de la route.

3. Dispositif de positionnement selon la revendication 2, **caractérisé en ce que** les marques pour placer les capteurs de pression acoustique sont des indentations à la fois pour recevoir les capteurs de pression acoustique et aussi pour leur fixation dans la position déterminée.

4. Dispositif de positionnement selon la revendication 1, **caractérisé en ce que** la distance entre le gabarit (5) et la surface (3) de la route est ajustable au moyen des colonnes (6) dans la plage de 6 à 25 centimètres.

5. Dispositif de positionnement selon la revendication 1, **caractérisé en ce que** les marques pour placer les capteurs de pression acoustique sont disposées symétriquement par rapport à l'axe de la roue (2) et régulièrement espacés les uns des autres.

6. Le dispositif de positionnement selon la revendication 5, **caractérisé en ce que** l'espacement entre les marques pour placer les capteurs de pression acoustique se trouve dans une plage allant de 15 à 25 centimètres.

7. Dispositif de positionnement selon l'une des revendications 1 à 2, **caractérisé en ce que** le gabarit (5) est muni d'une règle à son bord extérieur.

8. Dispositif de positionnement selon la revendication 1, **caractérisé en ce que** les capteurs de pression acoustique sont des microphones directionnels.
